# FASCICULE DE BREVET EUROPEEN

(11) **EP 1 084 385 B1**
(45) Date de publication et mention de la délivrance du brevet: **03.04.2002**
(21) Numéro de dépôt: 99923645.8
(22) Date de dépôt: 01.06.1999
(51) Int. Cl.: G01K 11/06

(54) **INDICATEUR DE CONTROLE DE LA TEMPERATURE DE CONSERVATION DE PRODUITS REFRIGERES**
TEMPERATURÜBERWACHUNGSGERÄT FÜR GEFRORENE PRODUKTE
INDICATOR FOR CONTROLLING REFRIGERATED PRODUCT STORAGE TEMPERATURE

(30) Priorité: 03.06.1998 FR 9807129
(43) Date de publication de la demande: 21.03.2001
(73) Titulaire: Costanza, Frédéric, 13007 Marseille (FR)
(72) Inventeur: Costanza, Frédéric, 13007 Marseille (FR)
(74) Mandataire: Roman, Michel
(86) Numéro de dépôt international: FR9901276
(87) Numéro de publication internationale: WO9963313

(56) Documents cités:
- EP-A- 0 501 880
- EP-A- 0 667 513
- GB-A- 2 225 425
- US-A- 4 051 804

## Description

La présente invention a pour objet un indicateur de contrôle de la température de conservation de produits réfrigérés.

Il est destiné en particulier à permettre de vérifier que des produits congelés ou surgelés n'ont pas subi d'altération, par suite de la rupture de la chaîne du froid due à une défaillance des circuits de refroidissement de l'enceinte réfrigérée de conservation ou de transport, ou à d'autres raisons. Il concerne principalement les produits alimentaires conservés par le froid, mais peut être utilisé dans tous les cas où une température de stockage doit être maintenue, par exemple pour des produits pharmaceutiques.

Les produits congelés ou surgelés doivent être conservés à une température restant en permanence au-dessous d'une température déterminée. Or une importante variation de température peut se produire de manière fortuite, sans que le distributeur du produit, ni le consommateur n'en soient avertis, dans le cas où la température se trouve à nouveau à une valeur correcte lors de la vérification.
En cours de stockage et de transport, les produits réfrigérés passent à plusieurs reprises un temps difficilement contrôlable hors des enceintes froides de conservation ou de transport. De plus, pour leur distribution, ces produits sont souvent présentés dans des vitrines, et accessibles à l'acheteur qui peut ainsi les manipuler, les sortir de l'enceinte réfrigérée et les remettre après les avoir examinés.

Pour permettre un contrôle efficace, il faut que le franchissement de la température limite autorisée à l'intérieur de tout emballage individuel apparaisse par un signe facilement visible, qui persiste après que la température se trouve à nouveau au dessous de la valeur limite.
A ce jour, on connaît un certain nombre de dispositifs de contrôle utilisant une solution aqueuse dont la congélation ou la décongélation provoque un phénomène visible irréversible permettant de constater qu'une température critique a été dépassée.
Par exemple, le brevet N° GB 2 215 460 décrit un indicateur de décongélation consistant en un simple cube de glace placé dans une enveloppe de plastique transparente scellée et fixée à l'intérieur de l'emballage du produit alimentaire. L'indicateur change de forme en cas de fusion du cube de glace.
Un autre brevet, publié sous le N° FR 2 553 512, concerne un indicateur de maintien de température en dessous d'un seuil comportant un tube en matière transparente contenant un bloc glacé incolore et un bloc glacé coloré d'une même solution aqueuse. En cas de dépassement de la température de congélation de la solution, les deux blocs fondent et le colorant du bloc coloré migre dans tout le tube. En cas de recongélation, l'indicateur ne contient plus qu'un seul bloc uniformément coloré.
Le brevet N° FR 2 611 899 fait état d'un procédé de contrôle de température de produits congelés, notamment alimentaires, par un témoin dont la température de fusion après congélation correspond à la limite supérieure de température du produit à contrôler. Ce procédé étant caractérisé en ce qu'on congèle deux liquides de couleurs différentes et on place les produits congelés dans une même enceinte pour qu'à leur fusion les liquides se mélangent et changent de couleur.
L'auteur de la présente invention a lui-même déposé sous le N° FR 96 15 400 une demande de brevet portant sur un indicateur de température utilisant les mêmes techniques.

Ces dispositifs présentent le grave inconvénient de devoir être fabriqués et stockés à une température inférieure au point de fusion de leurs constituants, ce qui impose soit de les réaliser sur le lieu de conditionnement des produits à contrôler, soit la mise en place d'une "chaîne de froid" pour les indicateurs eux-mêmes avec vérification de leur état avant mise en place. Ces contraintes entraînent évidemment une augmentation très sensible du coût de revient.

Le document GB-A-2 225 425 contient une enveloppe comprenant deux compartiments comprenant des solutions aqueuses de couleur différente qui sont séparés par un pince amovible. Quand l'indicateur est gelé, la pince est retirée et lorsque le produit à contrôler dégèle, les deux liquides fondent et se mélangent en donnant un liquide d'une troisième couleur.

Le document EP-A-0 501 880 décrit un dispositif dans lequel l'indicateur est constitué d'un boîtier thermoformé et d'un étui en matière plastique, en verre ou en métal renfermant un liquide, l'étui étant en partie entouré d'une matière absorbante. Cet indicateur comprend aussi un bouchon éjectable qui ferme l'étui et qui est expulsé lors de la cristallisation dudit liquide.

Le dispositif selon la présente invention a pour objectif de remédier à cet état de choses. Il permet en effet de fabriquer, stocker et transporter à température ambiante des témoins de rupture de la chaîne de froid dont le prix de fabrication peut être très bas.

Il est constitué d'une enveloppe transparente comportant un étranglement constituant une séparation étanche délimitant deux compartiments contenant chacun, à température ambiante, un volume de solution aqueuse de couleur différente, le dispositif étant conçu de façon à ce que lorsque l'on congèle la solution aqueuse, sa dilatation entraîne l'ouverture de la séparation entre les deux volumes ceux-ci, solidifiés, restant distincts, mais pouvant alors se mélanger en faisant apparaître une nouvelle couleur en cas d'élévation de la température provoquant leur fusion.

Sur les dessins annexés, donnés à titre d'exemple d'une des formes de réalisation de l'objet de l'invention:
la figure 1 représente en coupe un indicateur avant utilisation,
la figure 2 montre le même dispositif une fois congelé, après sa mise en service,
sur les figures 3 et 4 on peut voir un indicateur respectivement partiellement et totalement décongelé
et la figure 5 représente en perspective axonométrique un indicateur incorporé à l'emballage d'un produit réfrigéré.

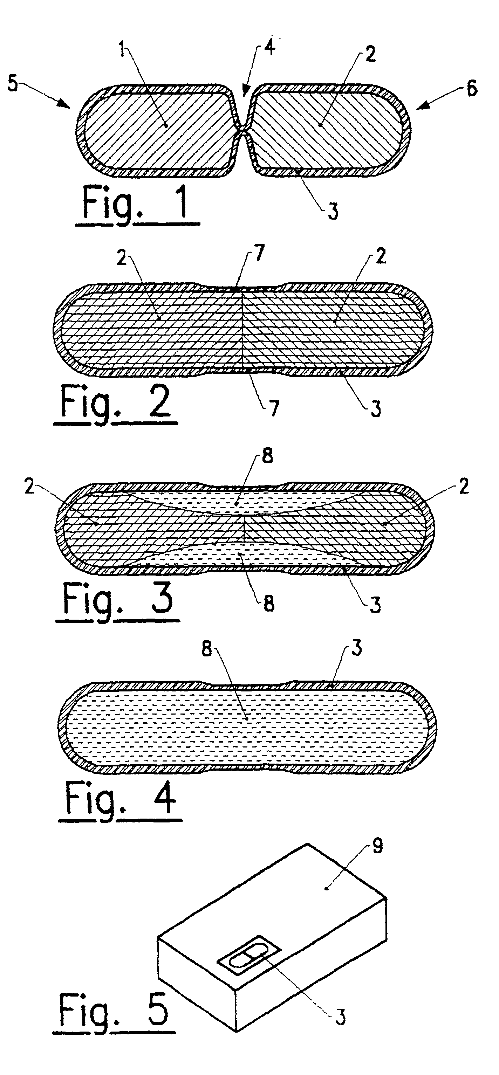

Le dispositif, figures 1 à 5, est constitué, à température ambiante, par exemple 20 °C, de deux volumes 1, 2 de solution aqueuse liquide colorée de deux teintes différentes, contenus dans une même enveloppe 3 étanche et au moins partiellement transparente (figure 1).

Les deux volumes 1, 2 sont séparés dans l'enveloppe 3 par un étranglement 4 de cette dernière formant une séparation délimitant deux compartiments 5, 6 empêchant les deux liquides de se mélanger. L'étanchéité de cet étranglement peut être réalisé de plusieurs façons, soit par thermosoudure, soit par collage, soit grâce au système de fermeture formé d'une nervure s'engageant dans une rainure utilisée pour certains sachets en plastique souple, soit encore par pincement des parois de l'enveloppe 3 au moyen d'une pince amovible ou fracturable.
L'enveloppe 3 sera de préférence réalisée en plastique transparent souple ou semi-rigide.

L'eau présente la propriété remarquable d'augmenter de volume en se solidifiant. A la congélation de l'indicateur, le contenu à base d'eau des deux compartiments 5, 6 subit donc une expansion. L'enveloppe 3 est conçue de manière à ce que la force exercée par cette dilatation entraîne l'écartement des deux compartiments ce qui a pour effet de faire céder la séparation entre les deux volumes 1, 2 qui, étant passés à l'état solide, resteront distincts et, par conséquent, les deux couleurs ne pourront pas se mélanger tant que le dispositif ne subit pas de réchauffement (figure 2).
Afin d'assurer que la dilatation des volumes 1, 2 provoque bien l'ouverture de l'étranglement 4 et non le gonflement des compartiments 5, 6, les parois de cet étranglement pourront avantageusement être constituées d'une partie amincie 7 de l'enveloppe 3.

En cas d'élévation de la température au dessus du point de congélation de la solution aqueuse, les deux volumes 1, 2 colorés fusionnent, les liquides se mélangent puisque la séparation n'est plus étanche et le mélange 8 des deux couleurs donnera une nouvelle couleur qui permettra de constater visuellement qu'il y a eu rupture de la chaîne du froid. Par exemple, si les deux volumes étaient initialement colorés respectivement en jaune et en bleu, le mélange deviendra vert. Même si on recongèle le dispositif, le changement de couleur restera irréversible.
La fusion peut être partielle (figure 3) ou complète (figure 4), ce qui permet d'estimer la durée pendant laquelle la température est montée au-dessus de la valeur autorisée.

La solution aqueuse des volumes 1, 2 contient, outre les colorants, un ou plusieurs additifs tels que le chlorure de sodium permettant d'ajuster la température de fusion des deux liquides.

La taille de l'indicateur peut être calculée de façon à ce que la durée de la fusion soit plus ou moins longue en fonction du volume du produit surgelé auquel le dispositif est associé.

Le dispositif est associé au produit alimentaire ou autre à contrôler de façon à être visible de l'extérieur. Il pourra faire partie intégrante de l'emballage 9 ou être fixé sur ce dernier par tous moyens approprié (figure 5).
Afin d'éviter l'utilisation d'un indicateur aux caractéristiques déterminées pour un produit auquel il n'est pas destiné, ce dernier pourra comporter un code tel que code alpha-numérique ou code barre figurant également sur l'emballage du produit à contrôler.

L'indicateur décrit peut être adapté pour être vendu aux particuliers dans le but d'être utilisé pour les produits conservés dans les congélateurs domestiques. Dans ce cas, il pourra avantageusement comporter une face auto-adhésive.

Le positionnement des divers éléments constitutifs donne à l'objet de l'invention un maximum d'effets utiles qui n'avaient pas été, à ce jour, obtenus par des dispositifs similaires.

## Revendications

1. Indicateur de contrôle de la température de conservation de produits réfrigérés, destiné à permettre de vérifier que des produits réfrigérés, en particulier des produits alimentaires conservés par le froid, n'ont pas subi d'altération par suite d'une rupture de la chaîne du froid, du type constitué d'une enveloppe (3) au moins partiellement transparente comportant une séparation étanche délimitant deux compartiments (5, 6) contenant chacun, à température ambiante, un volume (1, 2) de solution aqueuse colorée de teinte différente, la congélation desdits volumes de solution entraînant l'ouverture de la séparation entre les deux volumes, ceux-ci, solidifiés, restant distincts, mais pouvant alors se mélanger en faisant apparaitre une nouvelle couleur en cas d'élévation de la température provoquant leur fusion,
**caractérisé en ce que** la séparation étanche est formée d'un étranglement (4) de l'enveloppe (3) dont les parois sont constituées par une partie amincie (7) de ladite enveloppe de manière à assurer que la dilatation des deux volumes (1, 2) de solution aqueuse provoque l'ouverture de l'étranglement (4) et non le gonflement des compartiments (5, 6).

2. Indicateur selon la revendication 1, se caractérisant par le fait que l'enveloppe (3) est réalisée en matière plastique transparente souple ou semi-rigide.

3. Indicateur selon la revendication 2, se caractérisant par le fait que l'étanchéité de l'étranglement (4) est réalisé par thermosoudure ou par collage.

4. Indicateur selon la revendication 2, se caractérisant par le fait que l'étanchéité de l'étranglement (4) est réalisé au moyen d'une nervure *s*'engageant dans une rainure comme certains sachets connus en matière plastique souple.

5. Indicateur selon la revendication 2, se caractérisant par le fait que l'étanchéité de L'étranglement (4) est réalisé par pincement des parois de l'enveloppe (3) au moyen d'une pince fracturable.

6. Indicateur selon l'une quelconque des revendications précédentes, se caractérisant par le fait que la solution aqueuse des deux volumes (1, 2) contient un ou plusieurs additifs tels que le chlorure de sodium permettant d'ajuster la température de fusion des deux liquides.

7. Indicateur selon l'une quelconque des revendications précédentes, se caractérisant par le fait qu'il est fixé sur l'emballage (9) du produit alimentaire ou autre à contrôler de façon à être visible de l'extérieur.

8. Indicateur selon l'une quelconque des revendications 1 à 7, se caractérisant par le fait qu'il fait partie intégrante de l'emballage (9) du produit alimentaire ou autre à contrôler.

9. Indicateur selon la revendication 9, se caractérisant par le fait qu'il comporte un code tel que code alphanumérique ou code barre figurant également sur l'emballage du produit à contrôler, afin d'éviter l'utilisation d'un indicateur aux caractéristiques déterminées pour produit auquel il n'est pas destiné.

10. Indicateur selon l'une quelconque des revendications 1 à 6, se caractérisant par le fait qu'il comporte une face auto-adhésive lui permettant d'être utilisé par des particuliers pour des produits conservés dans les congélateurs domestiques.

## Patentansprüche

1. Temperaturanzeiger für die Lagerung von Kühlware, bestimmt zur Kontrolle, dass die gekühlte Ware, insbesondere durch Kühlung konservierte Nahrungsmittel, keine Veränderungen, insbesondere durch Unterbrechung der Kältekette, erfahren hat, in Form einer Hülle (3), die zumindest teilweise transparent ist und eine dichte Trennwand besitzt, welche zwei Kammern (5, 6) trennt, die jede bei Raumtemperatur ein Volumen (1, 2) einer wässerigen Lösung unterschiedlicher Farbe enthalten, wobei das Gefrieren dieser Lösungen ein Öffnen der Trennwand zwischen beiden Volumen bewirkt, die sich voneinander unterscheiden solange sie im festen Zustand sind, sich jedoch vermischen können und damit eine neue Farbe bekommen, wenn die Temperatur ansteigt und ihr Schmelzen bewirkt,
**gekennzeichnet dadurch, dass** die dichte Trennwand aus einer Verengung (4) der Hülle (3) besteht, deren Wandungen aus einem dünneren Teil (7) der genannten Hülle bestehen, so dass gewährleistet ist, dass die Wärmeausdehnung der beiden Volumen (1, 2) der wässerigen Lösung ein Öffnen der Verengung (4) und nicht ein Aufblähen der Kammern (5, 6) bewirkt.

2. Anzeiger gemäß Anspruch 1, **gekennzeichnet dadurch, dass** die Hülle (3) aus transparentem, weichem oder halbsteifem Kunststoff ist.

3. Anzeiger gemäß Anspruch 2, **gekennzeichnet dadurch, dass** die Dichtigkeit der Verengung (4) durch thermisches Verschweißen oder Kleben realisiert ist.

4. Anzeiger gemäß Anspruch 2, **gekennzeichnet dadurch, dass** die Dichtigkeit der Verengung (4) durch einen Wulst, der in eine Nut eingreift, realisiert ist, wie bestimmte Tüten bekannter Art aus weichem Plastik.

5. Anzeiger gemäß Anspruch 2, **gekennzeichnet dadurch, dass** die Dichtigkeit der Verengung (4) durch Zusammendrücken der Wandungen der Hülle (3) mit Hilfe einer brechbaren Zange erfolgt.

6. Anzeiger gemäß einem der vorstehenden Ansprüche, **gekennzeichnet dadurch, dass** die wässerige Lösung der beiden Volumen (1, 2) einen oder mehrere Zusätze enthält, zum Beispiel Natriumchlorid, um die Schmelztemperatur der beiden Flüssigkeiten einzustellen.

7. Anzeiger gemäß einem der vorstehenden Ansprüche, **gekennzeichnet dadurch, dass** er auf der Verpackung (9) des Nahrungsmittels oder eines anderen zu kontrollierenden Produkts von außen sichtbar befestigt wird.

8. Anzeiger gemäß einem der Ansprüche 1 bis 7, **gekennzeichnet dadurch, dass** er integraler Bestandteil der Verpackung (9) des Nahrungsmittels oder eines anderen zu kontrollierenden Produkts ist.

9. Anzeiger gemäß Anspruch 9, **gekennzeichnet dadurch, dass** er einen Code besitzt, zum Beispiel einen alphanumerischen Code oder einen Strichcode, der auch auf der Verpackung des zu kontrollierenden Produkts vorhanden ist, um zu vermeiden, dass ein Anzeiger mit festgelegten Merkmalen für ein Produkt verwendet wird, für das er nicht bestimmt ist.

10. Anzeiger gemäß einem der Ansprüche 1 bis 6, **gekennzeichnet dadurch, dass** er eine selbstklebende Fläche besitzt, so dass er von Privatpersonen für die in häuslichen Gefrierschränken oder -truhen aufbewahrten Produkte verwendet werden kann.

## Claims

1. Temperature control indicator for the conservation of refrigerated products, intended to allow checking that the refrigerated products, in particular foodstuffs preserved by cold, have not undergone deterioration as a result of a break in the cold chain, of a type consisting of an envelope (3) at least partially transparent comprising a watertight partition separating two compartments (5, 6) containing each one, at ambient temperature, a volume (1, 2) of aqueous solution of different colours, the freezing of the aforesaid volumes of solution leading to the opening of the separation between the two volumes, which while solidified remain separate, but may become mixed and change colour when their temperature increases causing them to melt,
**characterized in that** the leaktight partition is formed of a narrowing (4) of the envelope (3) whose walls consist of a thinned part (7) of the aforementioned envelope so as to ensure that the expansion of the two volumes (1, 2) of aqueous solution causes the narrowing (4) to open and not swelling of the compartments (5, 6).

2. Indicator according to claim 1, **characterized by** the fact that the envelope (3) is made out of a flexible or semi-rigid transparent plastic.

3. Indicator according to claim 2, **characterized by** the fact that the sealing of the narrowing (4) is by heat welding or bonding.

4. Indicator according to claim 2, **characterized by** the fact that the sealing of narrowing (4) is by means of a rib that engages in a groove such as found on certain known bags in flexible plastic.

5. Indicator according to claim 2, **characterized by** the fact that the narrowing (4) is sealed by pinching the walls of the envelope (3) by means of a breakable clip.

6. Indicator according to any of the preceding claims, **characterized by** the fact that the aqueous solution of the two volumes (1, 2) contains one or more additives such as sodium chloride for adjusting the melting point of the two liquids.

7. Indicator according to any of the preceding claims, **characterized by** the fact that it is secured on the wrapping (9) of the foodstuff or other product to be inspected so as to be visible from the outside.

8. Indicator according to any of claims 1 to 7, **characterized by** the fact that it forms an integral part of the wrapping (9) of the foodstuff or other product to be inspected.

9. Indicator according to claim 9, **characterized by** the fact that it carries a code such as an alphanumeric code or bar code also shown on the wrapping of the product to be inspected, so as to avoid the use of an indicator with defined characteristics on a product for which it is not intended.

10. Indicator according to any of claims 1 to 6, **characterized by** the fact that it comprises a self-adhesive face enabling it to be used by private individuals for products stored in domestic freezers.
